# EUROPÄISCHE PATENTSCHRIFT

(11) **EP 4 604 071 B1**
(45) Veröffentlichungstag und Bekanntmachung des Hinweises auf die Patenterteilung: **21.01.2026**
(21) Anmeldenummer: 24157543.0
(22) Anmeldetag: 14.02.2024
(51) Int. Cl.: G06V 10/10, G06V 10/82, G06V 20/52

(54) **ZUORDNEN EINER ZIELKLASSE ZU EINEM OBJEKT**
ASSIGNING A TARGET CLASS TO AN OBJECT
AFFECTATION D'UNE CLASSE CIBLE À UN OBJET

(43) Veröffentlichungstag der Anmeldung: 20.08.2025
(73) Patentinhaber: SICK AG, 79183 Waldkirch (DE)
(72) Erfinder: Weber, Oliver, 79110 Freiburg (DE); Mai, Dominic, 79211 Denzlingen (DE)

(56) Entgegenhaltungen:
- EP-A1- 3 865 222
- DE-A1- 102024 123 268
- US-A1- 2022 058 425
- ANONYMOUS: "Multiclass classification", WIKIPEDIA, 20 October 2023 (2023-10-20), pages 1 - 2, XP093171702, Retrieved from the Internet <URL:https://en.wikipedia.org/w/index.php?title=Multiclass_classification&oldid=1181072194> [retrieved on 20240607]
- YOUSAF KANWAL ET AL: "An attention mechanism-based CNN-BiLSTM classification model for detection of inappropriate content in cartoon videos", vol. 83, no. 11, 16 September 2023 (2023-09-16), pages 31317 - 31340, XP093171981, Retrieved from the Internet <URL:https://link.springer.com/content/pdf/10.1007/s11042-023-16727-6.pdf> [retrieved on 20240607], DOI: 10.1007/s11042-023-16727-6

## Beschreibung

Die Erfindung betrifft eine Bilderfassungsvorrichtung und ein Verfahren zum Zuordnen einer Zielklasse zu einem Objekt nach dem Oberbegriff von Anspruch 1 beziehungsweise 11.

In zahlreichen Bildverarbeitungs-Anwendungen insbesondere der Logistik oder Automatisierung ist es erforderlich, Objekte oder deren Eigenschaften zu erkennen. Für das Klassifizieren von Bilddaten beziehungsweise darin aufgenommener Objekte wurden schon lange neben klassischen Verfahren auch solche des maschinellen Lernens oder der künstlichen Intelligenz verwendet. Seit der wegweisenden Veröffentlichung von AlexNet in Krizhevsky, Alex, IIya Sutskever, und Geoffrey E. Hinton, "Imagenet classification with deep convolutional neural networks", Advances in neural information processing systems 25 (2012) dominieren dieses Feld praktisch unumstritten die tiefen neuronalen Netze (Deep Learning). Allerdings gab es hier zwischenzeitlich erhebliche Weiterentwicklungen.

Eine Spielart der Klassifikation ist die sogenannte Multi-Label-Classification. Dabei werden einem Objekt mehrere Eigenschaften oder Klassen zugewiesen. Im Folgenden wird dafür der deutsche Begriff Multiklassen-Klassifikation verwendet, obwohl dies strenggenommen erst einmal nur der Gegenbegriff zu binärer Klassifikation ist. Mit Multiklassen-Klassifikation im soeben definierten Sinne befasst sich beispielsweise die Arbeit von Read, Jesse, und Fernando Perez-Cruz, "Deep learning for multi-label classification", arXiv preprint arXiv:1502.05988 (2014).

Eine besonders leistungsfähige Multiklassen-Klassifikation beschreibt Ridnik, Tal, et al, "ML-decoder: Scalable and versatile classification head", Proceedings of the IEEE/CVF Winter Conference on Applications of Computer Vision, 2023. Dabei wird ein Aufmerksamkeitsmechanismus verwendet, wie aus der Transformer-Architektur bekannt, wobei durch eine Adaption (Verzicht auf den Self-Attention Layer) ein nur linearer Aufwand erreicht wird. Der ML-Decoder ist als ergänzender Klassifikatorkopf gedacht, dem eine Vorverarbeitung mit einem weiteren neuronalen Netz vorausgeht, wie etwa ResNet oder TResNet, siehe zu letzterem Ridnik, Tal, et al. "Tresnet: High performance gpu-dedicated architecture", proceedings of the IEEE/CVF winter conference on applications of computer vision, 2021. Eine Alternative hierzu ist MobileViT aus der Arbeit Mehta, Sachin, und Mohammad Rastegari, "Separable self-attention for mobile vision transformers", arXiv preprint arXiv:2206.02680 (2022). Schließlich sei noch erwähnt, dass bei Multiklassen-Klassifikation eine asymmetrische Fehlerbewertung (Loss-Function) hilfreich sein kann, vgl. Ridnik, Tal, et al. "Asymmetric loss for multi-label classification", Proceedings of the IEEE/CVF International Conference on Computer Vision, 2021.

Die US 2022/0058425 A1 offenbart ein System für die Identifikation von in Regalen gelagerten Objekten. Ein Roboter nimmt Bilder der Regale auf, die mit verschiedenen Verfahren unter Verwendung von Deep Learning ausgewertet werden: Ein erstes Modell unterteilt die Objekte in verschiedene Klassen, wie an Haken hängende Produkte, unverpackte Produkte, sogenannte "Shelf-Ready"-Produkte, also Boxen mit mehreren Produkten, die zur Entnahme der Produkte geöffnet und auf ein Regal gestellt werden, und ähnliche weitere Klassen. Für ein "Shelf-Ready"-Produkt wird das Bild erneut in einem zweiten Klassifikator ausgewertet, um festzustellen, ob die Box leer ist oder nicht.

Die Arbeit von Yousaf, Kanwal und Tabassam Nawaz, "An attention mechanism-based CNN-BiLSTM classification model for detection of inappropriate content in cartoon videos", Multimedia Tools and Applications 83.11 (2024): 31317-31340 befasst sich mit einer Ende-zu-Ende trainierten Architektur, die Videos in drei Kategorien klassifiziert.

Aus der EP 3 865 222 A1 ist ein Verfahren zum Sortieren von Objekten auf einem Förderband bekannt.

In der Praxis stellt das Training eines neuronalen Netzes für eine bestimmte Klassifikationsaufgabe eine Herausforderung dar, da dafür ein enormer Aufwand betrieben werden muss. Das wird besonders störend, wenn sich die Klassendefinitionen im Laufe der Zeit ändern. Bisher sind solche Anpassungen nur durch erneutes Training oder jedenfalls ein umfangreiches Nachtraining möglich.

Es ist daher Aufgabe der Erfindung, die Zuordnung einer Klasse zu Bilddaten weiter zu verbessern.

Diese Aufgabe wird durch eine Bilderfassungsvorrichtung und ein Verfahren zum Zuordnen einer Zielklasse zu einem Objekt nach Anspruch 1 beziehungsweise 11 gelöst. Die Zielklasse ist das eigentliche Ergebnis der Klassifikation und wird in Abgrenzung zu den sogleich eingeführten Zwischenklassen so genannt, denn die erfindungsgemäße Klassifikation verläuft zweistufig. Mit einem Bildsensor werden Bilddaten mit dem zu klassifizierenden Objekt aufgenommen. Eine Steuer- und Auswertungseinheit wertet die Bilddaten aus, um die Zielklasse zuzuordnen, und dafür ist darin ein Verfahren des maschinellen Lernens implementiert, insbesondere ein neuronales Netz. Mit Steuer- und Auswertungseinheit ist mindestens eine beliebige Hardwarekomponente bezeichnet, die intern in der Bilderfassungsvorrichtung vorgesehen und/oder daran angeschlossen sein kann und die die erforderlichen Rechen- und Speicherkapazitäten bereitstellt.

Die Erfindung geht von dem Grundgedanken aus, zunächst mit einem Multiklassen-Klassifikator Zwischenklassen zu bestimmen. Das Ergebnis dieses Zwischenschritts sind Konfidenzwerte, die angeben, wie verlässlich den Bilddaten eine jeweilige Zwischenklasse zugeordnet werden konnte. Dabei sind Mehrfachzuordnungen in mehrere oder sogar alle Zwischenklassen ausdrücklich erwünscht. Denkbar ist ein digitaler, uneigentlicher Konfidenzwert, der also mit einer Ja/Nein-Information feststellt, ob eine Zwischenklasse zugeordnet wird oder nicht. Bevorzugt sind aber quantitative Konfidenzwerte beispielsweise im Intervall [0,1], das sich durch einfache Reskalierung immer erreichen lässt. Der Multiklassen-Klassifikator arbeitet mit einem Verfahren des maschinellen Lernens.

Anschließend erfolgt eine Zuordnung in mindestens eine, vorzugsweise genau eine Zielklasse anhand der Zwischenklassen. Dazu dient eine Abbildung von den Konfidenzwerten der Zwischenklasse in die Zielklassen. Diese Abbildung ist somit eine Funktion oder Zuordnungsvorschrift, die einem Tupel von Konfidenzwerten eine oder mehrere Zielklassen zuordnet. Das Tupel hat vorzugsweise so viele Elemente, wie es Zwischenklassen gibt, ein etwaiger Dimensionsunterschied zu einem Tupel mit einer andern Anzahl Elemente kann ohnehin durch Auffüllen mit Nullen beziehungsweise eine Projektionsabbildung auf diesen Fall zurückgeführt werden. Zwischenklassen und Zielklassen sind nicht untereinander identisch, es gibt also mindestens eine Zielklasse, die sich unter den Zwischenklassen nicht findet. Sehr anschaulich und vereinfachend mischt sich die Abbildung die Zielklassen aus den Zwischenklassen unter Berücksichtigung vorgegebener Regeln neu zurecht.

Das Verfahren des maschinellen Lernens ist somit auf die Zwischenklassen und nicht auf die Zielklassen trainiert. Letzteres wäre prinzipiell denkbar, wird aber erfindungsgemäß gerade vermieden, um bei Änderung der Zielklassen auf ein aufwändiges (Nach-)training verzichten zu können. Die sich an die Multiklassen-Klassifikation anschließende Abbildung bedarf vorzugsweise keines Trainings, sondern ist das Ergebnis einer vergleichsweise einfachen Optimierung. Denkbar bleibt, hierfür ebenfalls ein Verfahren des maschinellen Lernens einzusetzen, insbesondere ein zweites neuronales Netz. Der Aufwand für dessen Training ist sehr gering, da lediglich die im Vergleich zu den Pixeln eines Bildes sehr wenigen Zwischenklassen als Eingangsdaten berücksichtigt werden müssen. Vorzugsweise ist aber die Abbildung eine schlichte, deterministische Zuordnungsvorschrift oder ein einfacher, nach den Regeln der Zielklassen parametrierter Algorithmus ohne Verfahren des maschinellen Lernens oder neuronales Netz.

Die Erfindung hat den Vorteil, dass Bilddaten beziehungsweise darin aufgenommenen Objekten auf sehr einfache Weise Zielklassen zugeordnet werden können, die insbesondere für eine Anwendung in der Logistik oder Automatisierung vorgegeben werden. Dank der optimierten Abbildung von Zwischenklassen auf Zielklassen können Änderungswünsche zur Anpassung an neue Herausforderungen berücksichtigt werden. Der aufwändigste Schritt, nämlich das Training des Multiklassen-Klassifikators, muss dafür nicht wiederholt werden.

Vorzugsweise ist keine der Zielklassen eine Zwischenklasse. Es wurde schon erwähnt, dass Zwischenklassen und Zielklassen nicht insgesamt identisch sind, dann wäre die Abbildung überflüssig oder könnte durch extrem einfache Vorschriften wie die Identität oder eine Projektion verwirklicht werden. Nach dieser Ausführungsform sollen Zielklassen und Zwischenklassen weitergehend sogar disjunkt sein. Jede Zielklasse hängt damit von mehr als einer Zwischenklasse ab, die Zielklassen sind Mischungen der Zwischenklassen, und die verbindende Mischungsvorschrift ist die Abbildung.

Die Zwischenklassen sind vorzugsweise durch mindestens eine der folgenden Eigenschaften des aufgenommenen Objekts definiert: Material, insbesondere Plastik, Styropor, Holz oder Metall, Festigkeit, insbesondere starr oder flexibel, oder Form, insbesondere Quader, Zylinder, Torus oder unregelmäßig. Dies sind nur einige Beispiele möglicher Zwischenklassen, der Multiklassen-Klassifikator kann auf beliebige Zwischenklassen trainiert sein. Weitere denkbare Zwischenklassen betreffen die Farbe, die Reflexion oder die Größe, sofern ein Vergleichsmaßstab beispielsweise durch eine feste Aufnahmesituation gegeben ist.

Vorzugsweise sind genau zwei Zielklassen vorgesehen, insbesondere Karton oder kein Karton. Während es eine Vielzahl von Zwischenklassen gibt, wird im Endeffekt nach dieser Ausführungsform nur binär eine von zwei Zielklassen zugeordnet. Ein Beispiel ist die für Logistikanwendungen relevante Unterscheidung, ob es sich bei dem Objekt um Karton handelt oder nicht. In einer Ausführungsform wird die Eigenschaft Karton gänzlich aus anderen Eigenschaften der Zwischenklassen abgeleitet- Aber selbst wenn es eine Zwischenklasse für Karton als äußeres Verpackungsmaterial gibt, kann sich die Zielklasse dafür durch weitere Regeln unterscheiden, etwa weil ein mit Plastikstreifen oder einer Plastikhülle umgebener Karton eben nicht mehr in die Zielklasse Karton fallen soll. Solche Zusatzbedingungen können in der Abbildung von Zwischenklassen in Zielklassen erfasst werden.

Der Multiklassen-Klassifikator weist bevorzugt einen Aufmerksamkeitsmechanismus auf. Das ermöglicht eine besonders leistungsfähige Zuordnung zu Zwischenklassen.

Der Multiklassen-Klassifikator weist bevorzugt eine erste Stufe, die aus den Bilddaten eine Einbettung erzeugt, und eine zweite Stufe auf, die aus den Merkmalen der Einbettung die Zwischenklassen bestimmt. In der ersten Stufe (Backbone) werden Merkmale extrahiert, insbesondere in Form einer Einbettung (Embedding), die dann von einem Klassifikatorkopf (classification head) verwendet werden, um die Zwischenstufe zu bestimmen. Eine derartige Architektur, beispielsweise mit TResNet oder MobileViT als Backbone und dem ML-Decoder als classificatoin head, ist besonders gut geeignet, um verlässlich die Zwischenklassen zu bestimmen.

Die Abbildung bewertet die Zwischenklassen vorzugsweise einzeln mit einem Schwellenwert. Im allgemeinen Fall ist die Abbildung eine beliebige Funktion von einem m-dimensionalen Raum in einen n-dimensionalen Raum, bei m Zwischenklassen und n Zielklassen. In dieser Ausführungsform wird der Raum der möglichen Abbildungen deutlich beschnitten, indem jede der m Zwischenklassen zunächst für sich mit einer Schwelle bewertet wird. Das ergibt dann ein Äquivalent zu einem m-stelligen Binärwort, so dass lediglich noch diesen Binärworten eine jeweilige Zielklasse zugeordnet werden muss. Die für das Auffinden der Abbildung erforderliche Abbildung ist damit drastisch vereinfacht. Es ist nicht einmal erforderlich, alle m-stelligen Binärworte zu differenzieren. Beispielsweise kann es für die Entscheidung "Karton" ausreichen, dass die Zwischenklasse "Holz" oder "Plastik" über der Schwelle liegt, die Abbildung sollte dann "kein Karton" zuordnen. Die auf Schwellenwerte vereinfachte Abbildung hat den zusätzlichen Vorteil, dass solche Schwellen für den Benutzer intuitiv nachvollziehbar sind. Es gibt also interpretierbare Zwischenklassen beziehungsweise Wertungen des Einflusses der Zwischenklassen auf die Zielklassen. Im Gegensatz dazu sind Zwischenergebnisse oder Merkmalskarten aus einem herkömmlichen Training eines Verfahrens des maschinellen Lernens üblicherweise intransparent und für den Betrachter nicht nachvollziehbar ("Blackbox"). Die Interpretierbarkeit ermöglicht insbesondere eine ganz einfache Nachanpassung durch den Benutzer. Beispielsweise kann es sein, dass ein Paket schon bei geringem Plastikanteil nicht mehr in die Zielklasse Karton eingeordnet werden soll. Die Abbildung ist aber zunächst so parametriert, dass ein Karton mit einem nur geringen Konfidenzwert für Plastik noch der Zielklasse Karton zugeordnet wird. Ein Techniker vor Ort kann nun einfach den Schwellenwert für Plastik anpassen, damit das Paket wie gewünscht aufgrund des Plastikanteils nicht mehr als Karton klassifiziert wird. Das ist durch schlichtes Neusetzen eines Parameters erledigt und bedarf weder eines Nachtrainings des Multiklassen-Klassifikators noch einer erneuten Optimierung der Abbildung.

Die Abbildung ist bevorzugt dadurch eingelernt, dass der Multiklassen-Klassifikator Konfidenzwerte für eine Vielzahl mit einer gewünschten Zielklasse annotierte Beispielbilder bestimmt und in einer Optimierung diejenige Abbildung bestimmt wird, die bestmöglich bei Vorgabe der jeweils zu einem Beispielbild gefundenen Konfidenzwerte die zugehörige annotierte Zielklasse reproduziert. Die gewünschten Regeln für die Zielklassen werden somit in Form von Beispielbildern und der aus den Regeln für das jeweilige Beispielbild resultierenden Zielklasse vorgebeben, etwa in einem händischen Labeling-Prozess, in dem ein menschlicher Betrachter Beispielbilder den Regeln folgend annotiert. Die Quelle der annotierten Beispielbilder ist für die Erfindung nicht von Belang. Wird ein derart annotiertes Beispielbild von dem Multiklassen-Klassifikator bewertet, so sind anschließend die Zwischenklassen und, aus dem Label des Beispielbildes, die dazu passenden Zielklassen bekannt. Mit Bearbeitung einer Vielzahl von Beispielbildern ergibt sich eine Vielzahl von Tupeln der Art ((Zwischenklasse_1, ..., Zwischenklasse_m), (Zielklasse_1), ... (Zielklasse_n)), und daraus lässt sich beispielsweise mittels Funktionsfit oder einem anderen Optimierungsverfahren die Abbildung bestimmen, die diese Vielzahl von Tupeln möglichst weitgehend reproduziert. Anstelle eines Funktionsfits wäre ein weiteres Verfahren des maschinellen Lernens, insbesondere ein zweites neuronales Netz denkbar. Dessen Training basiert nicht mehr auf der Datenflut der ursprünglichen Bilddaten, sondern nur noch der Vielzahl der genannten Tupel, und ist damit unaufwändig.

Die Abbildung wird bevorzugt mit zunächst beliebigen Schwellenwerten für jede Zwischenklasse initialisiert, und die Optimierung verändert nur die Schwellenwerte. Das korrespondiert mit der oben diskutierten vereinfachten Abbildung, die Zwischenklassen einzeln mit einem Schwellwert bewertet. Damit wird möglicherweise kein globales Optimum gefunden, aber eine Abbildung, die ausreichend gut funktioniert, mit dem Vorteil eines sehr deutlich vereinfachten Optimierungsproblems.

Die Bilderfassungsvorrichtung ist bevorzugt an einer Fördereinrichtung montiert, auf der zu klassifizierende Objekte durch das Sichtfeld des Bildsensors gefördert werden, wobei insbesondere mehrere Kameraköpfe vorgesehen sind und die Steuer- und Auswertungseinheit dafür ausgebildet ist, die Aufnahmen der Kameraköpfe in den Bilddaten zu einem gemeinsamen Bild zusammenzuführen. Die Fördereinrichtung ist beispielsweise Teil einer Fertigungsstraße oder Sortieranlage der Automatisierungs- oder Logistikindustrie, und sie bringt Objekte nacheinander in den Erfassungsbereich. In manchen Fällen ist der Sichtbereich einer einzelnen Kamera für die Objekte oder die Fördereinrichtung zu klein. Dann kann eine Bilderfassungsvorrichtung mit zwei oder mehr Kameraköpfen eingesetzt werden, deren Bilddaten zusammengefügt werden (Stitching).

Das erfindungsgemäße Verfahren ist ein computerimplementiertes Verfahren, das beispielsweise in einer Kamera oder einer sonstigen Recheneinheit abläuft, sei es in Echtzeit in einer mindestens mittelbar an die Kamera angeschlossen Recheneinheit oder zeitversetzt in einer beliebigen Recheneinheit.

Die Abbildung wird bevorzugt dadurch eingelernt, dass der Multiklassen-Klassifikator Konfidenzwerte für eine Vielzahl mit einer gewünschten Zielklasse annotierte Beispielbilder bestimmt und in einer Optimierung diejenige Abbildung bestimmt wird, die bestmöglich bei Vorgabe der jeweils zu einem Beispielbild gefundenen Konfidenzwerte die zugehörige annotierte Zielklasse reproduziert. Das entspricht dem oben schon erläuterten Vorgehen. Zuvor wird der Multiklassen-Klassifikator trainiert, beispielsweise in einem überwachten Lernen anhand von mit Zwischenklassen annotierten Beispielbildern. Das Training des Multiklassen-Klassifikators ist ein von der Bestimmung der Abbildung zu unterscheidender Schritt. Das kann an ganz anderem Ort, zu anderer Zeit, in einem anderen Gerät stattfinden und verwendet andere Beispielbilder, oder jedenfalls einen anderen Trainingsdatensatz, in dem zumindest eine eigene Annotierung vorgenommen ist, nämlich mit Zwischenklassen und nicht Zielklassen. Wie mehrfach betont, wird der Multiklassen-Klassifikator nach dem Training auf die Zwischenklassen nicht erneut auf Zielklassen trainiert oder nachtrainiert, die Bestimmung von Zielklassen leistet die Abbildung aus den Zwischenklassen des Multiklassen-Klassifikators.

Das erfindungsgemäße Verfahren kann im Übrigen auf ähnliche Weise weitergebildet werden wie die Bilderfassungsvorrichtung und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Übersichtsdarstellung mit einer Kamera zum Klassifizieren von Objekten, die auf einem Förderband durch das Sichtfeld der Kamera gefördert werden;
- Fig. 2: ein beispielhaftes Ablaufdiagramm zum Klassifizieren zunächst in Zwischenklassen und dann Abbilden der Zwischenklassen auf eine Zielklasse;
- Fig. 3: eine Illustration der Abbildung von Zwischenklassen auf Zielklassen; und
- Fig. 4: ein beispielhaftes Ablaufdiagramm zum Trainieren des Multiklassen-Klassifikators für das Klassifizieren in Zwischenklassen und zum Auffinden der Abbildung von Zwischenklassen auf Zielklassen.

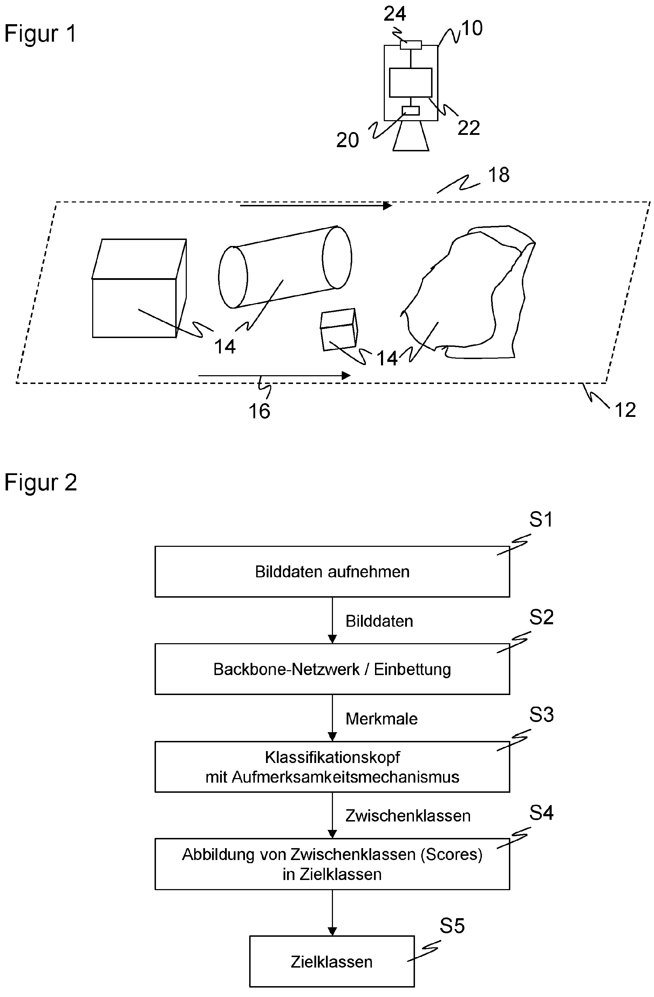

Figur 1 zeigt eine Kamera 10, die über einem Förderband 12 montiert ist, welches Objekte 14, wie durch den Pfeil 16 angedeutet, durch den Erfassungsbereich 18 der Kamera 10 fördert. Die stationäre Montage einer Kamera 10 an einem Förderband ist eine in der Praxis häufig vorkommende Anwendung, etwa für Logistik- oder Automatisierungsaufgaben oder eine Qualitätskontrolle. Die Erfindung bezieht sich aber auf das Klassifizieren von Bildern beziehungsweise der damit aufgenommenen Objekte 14, insbesondere mit dem Zweck, in Abhängigkeit von der Klassifizierung nachgelagerte Bearbeitungsschritte einzuleiten, wie das Sortieren, Anforderung einer manuellen Nachbearbeitung und dergleichen. Daher ist das Beispiel nicht einschränkend zu verstehen, ein Objekt 14 kann der Kamera 10 auch auf andere Weise präsentiert werden. Die Objekte 14 in Figur 1 unterscheiden sich darstellungsbedingt nur durch ihre Form, die Klassifikation kann natürlich auch andere Eigenschaften betreffen.

Die Kamera 10 erfasst mit einem Bildsensor 20 Bilddaten der geförderten Objekte 14, die von einer Steuer- und Auswertungseinheit 22 weiterverarbeitet werden. Die Steuer- und Auswertungseinheit 22 umfasst beispielsweise mindestens einen Rechenbaustein wie einen Mikroprozessor oder eine CPU (Central Processing Unit), ein FPGA (Field Programmable Gate Array), einen DSP (Digital Signal Processor), ein ASIC (Application-Specific Integrated Circuit), einen Kl-Prozessor, eine NPU (Neural Processing Unit), eine GPU (Graphics Processing Unit), eine VPU (Video Processing Unit) oder dergleichen. Die Steuer- und Auswertungseinheit 22 ist als interner Rechenbaustein dargestellt. Alternativ kann es mehrere Rechenbausteine geben, die mindestens teilweise auch extern der Kamera 10 angeordnet sein können. Eine externe Recheneinheit kann ein Computer beliebiger Bauart einschließlich Notebooks, Smartphones, Tablets oder Steuerungen ebenso sein wie ein lokales Netzwerk, ein Edge-Device oder eine Cloud. Ferner kann die Steuer- und Auswertungseinheit 22, die für das Klassifizieren oder die Inferenz zuständig ist, eine ganz andere Hardware umfassen als diejenige, in der die Klassifikation trainiert, eingelernt oder parametriert wird.

Es kommt ferner für die Erfindung nicht auf das konkrete Bildgebungsverfahren an, so dass die Kamera 10 nach irgendeinem an sich bekannten Prinzip aufgebaut sein kann. Beispielsweise wird jeweils nur eine Zeile erfasst, und die Steuer- und Auswertungseinheit 22 fügt die im Laufe der Förderbewegung erfassten Zeilen zu den Bilddaten zusammen. Mit einem matrixförmigen Bildsensor 20 lässt sich schon in einer Aufnahme ein größerer Bereich erfassen, wobei auch hier das Zusammenfügen von Aufnahmen sowohl in Förderrichtung als auch quer dazu möglich ist. Mit einer Kamera 10, die abweichend von Figur 1 über mehrere Kameraköpfe verfügt, können solche Mehrfachaufnahmen auch gleichzeitig oder zeitlich überlappend aufgenommen werden. Über eine Schnittstelle 24 kann die Kamera 10 Informationen ausgeben, wie Bilddaten oder zu den Bilddaten beziehungsweise den aufgenommenen Objekten 14 bestimmte Klassifikationsergebnisse.

Figur 2 zeigt ein beispielhaftes Ablaufdiagramm zum Klassifizieren von Bilddaten beziehungsweise darin aufgenommenen Objekten 14. In einem Schritt S1 werden Bilddaten aufgenommen. In einem Schritt S2 werden in einem Backbone-Netzwerk Merkmale zu den Bilddaten erzeugt. Als Backbone-Netzwerk kann beispielsweise TResNet oder MobileViT beziehungsweise MobileViTv2 eingesetzt werden. Bei einer Multiklassen-Klassifikation kann es vorteilhaft sein, eine asymmetrische Fehlerfunktion (loss function) zu verwenden.

In einem Schritt S3 werden die Merkmale des Backbone-Netzwerks einem Klassifikationskopf zugeführt, der einen Aufmerksamkeitsmechanismus nutzt. Der Klassifikationskopf ersetzt ("drop-in replacement") ein alternativ aber auch weiterhin verwendbares Pooling (GAP, global average pooling). Der Aufmerksamkeitsmechanismus, der insbesondere durch die Transformer-Architektur weite Bekanntheit erlangt hat, führt durch Berücksichtigung von Kontexten zu besseren Ergebnissen. Besonders geeignet ist der ML-Decoder aus der einleitend zitierten Literatur, auf die auch zu Einzelheiten hinsichtlich Backbone und asymmetrischer Fehlerfunktion ergänzend verwiesen wird. Der Aufmerksamkeitsmechanismus des Transformers ist in einem ML-Decoder zugunsten eines geringeren Aufwands abgewandelt, auch hierzu sei auf die Literatur verwiesen.

Als Ergebnis der Klassifikation werden Zwischenklassen und zugehörige Konfidenzwerte (Scoring) für die Zwischenklassen ausgegeben. Das in den Schritten S2 und S3 zweigeteilte Vorgehen mit einem Backbone und einem anschließenden Klassifikationskopf ist eine bevorzugte Ausführungsform eines Multiklassen-Klassifikators mit einer besonders modernen, leistungsfähigen Architektur. Es sind aber abweichend auch andere Klassifikationen möglich, solange als Ergebnis Zwischenklassen mit Konfidenzwerten resultieren.

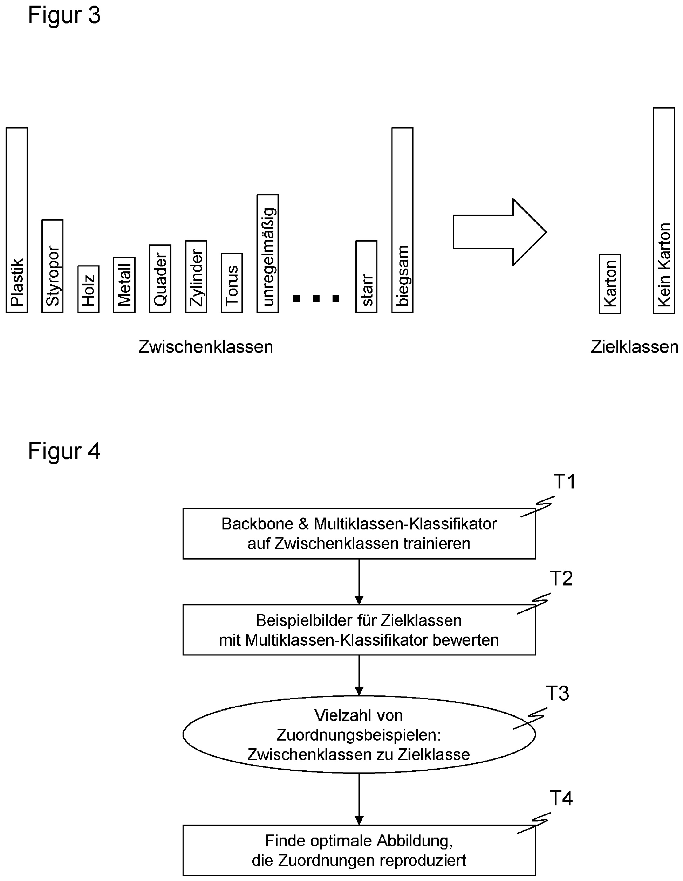

Die von dem Multiklassen-Klassifikator der Schritte S2 und S3 bestimmten Zwischenklassen sind noch nicht das gewünschte Resultat der Klassifikation, weshalb sie auch den Namen Zwischenklassen tragen. In einem Schritt S4 wird nun die eigentliche Zielklasse aus den Zwischenklassen und deren Konfidenzwerten bestimmt. Dies geschieht durch eine einfache Zuordnungsvorschrift oder Abbildung, die in Figur 3 illustriert ist. Dort sind auf der linken Seite einige beispielhafte Zwischenklassen gezeigt. Sie beziehen sich beispielsweise auf Material, Form und Festigkeit, wobei die Erfindung aber mit beliebigen auch sehr viel feineren Zwischenklassendefinitionen zurechtkommt, also weder auf diese Kategorien noch auf die konkreten Beispiele Plastik, Styropor, Holz, Metall, Quader, Zylinder, Torus, unregelmäßig, starr oder biegsam beschränkt ist. Die Höhe der Balken symbolisiert, wie deutlich diese Zwischenklasse von dem Multiklassen-Klassifikator gefunden worden ist, illustriert also den Konfidenzwert. Dabei ist ausdrücklich zugelassen, dass mehrere Zwischenklassen zugleich sehr ausgeprägt, d.h. mit hohem Konfidenzwert erkannt werden.

Die durch den Pfeil symbolisierte Abbildung weist den Konfidenzwerten der Zwischenklassen mindestens eine Zielklasse zu. Die Abbildung berücksichtigt durch die in der Abbildung definierte Zuordnungsvorschrift die Verteilung der Konfidenzwerte über die Zwischenklassen, um bestimmte Zielklassen zuzuweisen. In einer bevorzugten Ausführungsform gibt es nur jeweils eine Zielklasse, es ist aber auch in dem Endergebnis der Zielklassen analog den Zwischenklassen eine Mehrfachklassifikation denkbar, die Abbildung ist dann entsprechend mehrdimensional nicht nur in ihrem Definitionsbereich, sondern auch in ihrem Wertebereich.

In einem Schritt S5 sind dann die Zielklassen bestimmt. In dem illustrierten Beispiel der Figur 3 ergibt die Abbildung zunächst nicht nur eine Zielklasse, sondern wiederum Konfidenzwerte nun für die Zielklassen. Durch eine Schwellenbewertung oder Bestimmung des Maximalwerts kann die Anzahl der Zielklassen noch reduziert werden, insbesondere auf nur eine Zielklasse. Wie schon erwähnt, kann die Abbildung auch unmittelbar nur eine einzige Zielklasse ergeben, mit oder ohne Konfidenzwert. In dem Beispiel sind die Zwischenklassen Plastik und unregelmäßig stark vertreten, und demnach wird unter den hier binären Zielklassen Karton/kein Karton letzteres angegeben.

Figur 4 zeigt ein beispielhaftes Ablaufdiagramm zum Trainieren des Multiklassen-Klassifikators für das Klassifizieren in Zwischenklassen und zum Auffinden der Abbildung von Zwischenklassen auf Zielklassen. In einem Schritt T1 wird der Multiklassen-Klassifikator trainiert. Das geschieht beispielsweise in einem überwachten Lernen anhand von mit Zwischenklassen annotierten Trainingsbildern. Das Training eines neuronalen Netzes für eine festgelegte Klassifikationsaufgabe anhand von Beispielbildern und zugehörigen Labels ist an sich bekannt und wird hier nicht näher erläutert, einige ergänzende Erläuterungen finden sich wiederum in der einleitend zitierten Literatur.

In einem Schritt T2 werden Beispielbilder mit dem Multiklassen-Klassifikator bewertet. Für ein jeweiliges Beispielbild resultieren daraus Konfidenzwerte für die Zwischenklassen, wie links in Figur 3 resultiert. Diese Beispielbilder sind mit Zielklassen, nicht Zwischenklassen annotiert. Es sind somit nicht diejenigen des Schrittes T1 für das Training des Multiklassen-Klassifikators, der in diesem Stadium bereits fertig trainiert ist. Dabei ist erlaubt, dass sich Bilder aus dem Schritt T1 in dem Schritt T2 wiederholen, sie sind aber jedenfalls anders annotiert. Wie in Figur 3 gezeigt, können diverse auf Material, Form oder Festigkeit bezogene Zwischenklassen vorgesehen sein, während als Zielklassen beispielsweise Karton/kein Karton zu bestimmen sind. Die Beispielbilder sind beispielsweise händisch mit den zugehörigen Zielklassen annotiert, wobei insbesondere einem vorgegebenen Regelsatz gefolgt wurde. Das Annotieren kann in der Form erfolgen, dass die Bidler in jeweils einer Zielklasse zugehörige Partitionen aufgeteilt werden. Es wäre möglich, einen Klassifikator anhand der Beispielbilder direkt auf die Zielklassen zu trainieren, aber gerade dieser Aufwand soll erfindungsgemäß vermieden werden.

In einem Schritt T3 liegt nach vielfachem Durchlaufen des Schritts T2 eine Vielzahl von Zuordnungsbeispielen vor. Figur 3, die im Zusammenhang mit Figur 2 die Anwendung der Abbildung von Zwischenklassen auf Zielklassen illustriert hat, kann ebenso als eines der Zuordnungsbeispiele des Einlernens gemäß Figur 4 verstanden werden. Ein jeweiliges Zuordnungsbeispiel ist somit äquivalent zu einem m-Tupel der Konfidenzwerte zu den m Zwischenklassen, dem Konfidenzwerte von n Zielklassen zugeordnet werden, was beispielsweise als ((Zwischenklasse_1, ..., Zwischenklasse_m), (Zielklasse_1), ... (Zielklasse_n)) notiert werden kann. Wie schon erwähnt, können alternativ die Konfidenzwerte der Zielklassen entfallen, indem einfach binär angegeben wird, ob die Zielklasse vorhanden ist oder nicht.

In einem Schritt T4 wird nun mit einem Optimierungsverfahren eine Abbildung bestimmt, die möglichst gut verträglich mit den Zuordnungsbeispielen des Schrittes T3 ist beziehungsweise diese reproduziert. Damit ist natürlich keine Abbildung gemeint, die punktuell mit den Zuordnungsbeispielen korrespondiert und für abweichende Eingangswerte beliebige Ergebnisse ausgibt, sondern eine Abbildung, die insgesamt in einer gewählten Fehlermetrik optimal zu den Zuordnungsbeispielen passt und beispielsweise Vorgaben an Glattheit und sonstige Nebenbedingungen erfüllt. Das ist letztlich ein Funktionsfit, für den alle an sich bekannten Verfahren zur Verfügung stehen. Eine Möglichkeit besteht darin, ein Werkzeug für die Hpyerparameter-Optimierung (HPO) einzusetzen, wie Optuna (Akiba, Takuya, et al. "Optuna: A next-generation hyperparameter optimization framework", Proceedings of the 25th ACM SIGKDD international conference on knowledge discovery & data mining, 2019.).

Die Optimierung einer beliebigen Abbildung im Raum aller möglichen Abbildungen aus dem m-dimensionalen Raum der Zwischenklassen in den n-dimensionalen Raum der Zielklassen bedeutet einen gewissen Aufwand und konvergiert möglicherweise nicht in einem nützlichen Optimum. Daher ist denkbar, nur bestimmte Klassen von Abbildungen zuzulassen, insbesondere solche, die zunächst jede Zwischenklasse nur für sich bewerten. Beispielsweise kann die Abbildung im Schritt S4 der Figur 2 lediglich die Zwischenklassen mit einem Schwellenwert vergleichen, und aus den Zwischenklassen, deren Konfidenzwert über dem Schwellenwert liegt, wird auf die Zwischenklasse geschlossen. Entsprechend vereinfacht sich dann Schritt T4 der Figur 4 auf das Auffinden optimaler Schwellenwerte.

Somit erfolgt zusammenfassend durch die Abbildung, die in Schritt T4 der Figur 4 aufgefunden, eingelernt oder parametriert wird, eine Reklassifikation der ursprünglichen Zwischenklassen in neue Zielklassen. Die Zielklassen können nachträglich durch Regeln oder auf den Regeln basierend annotierte Beispielbilder vorgegeben werden. Der Aufwand für das Auffinden der Abbildung in Schritt T4 ist ungleich geringer als derjenige für ein Training oder Nachtraining des Multiklassen-Klassifikators anhand der Zielklassen.

## Patentansprüche

1. Bilderfassungsvorrichtung (10) zum Zuordnen einer Zielklasse zu einem Objekt (14), wobei die Bilderfassungsvorrichtung (10) einen Bildsensor (20) zur Aufnahme von Bilddaten des Objekts (14) und eine Steuer- und Auswertungseinheit (22) aufweist, die dafür ausgebildet ist, die Bilddaten mit einem Verfahren des maschinellen Lernens, insbesondere einem neuronalen Netz, auszuwerten und zu klassifizieren und den Bilddaten eine Zielklasse zuzuordnen und dabei als Verfahren des maschinellen Lernens einen Multiklassen-Klassifikator für die Klassifikation in eine Vielzahl von Zwischenklassen einzusetzen, wobei der Multiklassen-Klassifikator für das Klassifizieren in Zwischenklassen trainiert ist, **dadurch gekennzeichnet,**
**dass** die Steuer- und Auswertungseinheit (22) weiterhin dafür ausgebildet ist, mit dem Multiklassen-Klassifikator jeweilige Konfidenzwerte für die Zuordnung der Bilddaten zu einer jeweiligen Zwischenklasse zu bestimmen und anschließend durch Anwendung einer Abbildung, die einem Tupel von Konfidenzwerten eine oder mehrere Zielklassen zuordnet, die Zielklasse zu bestimmen, wobei es mindestens eine Zielklasse gibt, die sich nicht unter den Zwischenklassen findet, somit das Verfahren des maschinellen Lernens auf die Zwischenklassen und nicht auf die Zielklassen trainiert ist, und dass die Abbildung in einem Optimierungsverfahren anhand von Zuordnungsbeispielen, die jeweils einem Tupel von Konfidenzwerten eine Zielklasse oder Konfidenzwerte von Zielklassen zuordnen, derart bestimmt ist, dass die Abbildung in einer Fehlermetrik optimal zu den Zuordnungsbeispielen passt, wobei zur Erzeugung von Zuordnungsbeispielen mit Zielklassen annotierte Beispielbilder mit dem Multiklassen-Klassifikator bewertet werden.

2. Bilderfassungsvorrichtung (10) nach Anspruch 1,
wobei keine der Zielklassen eine Zwischenklasse ist.

3. Bilderfassungsvorrichtung (10) nach Anspruch 1 oder 2,
wobei die Zwischenklassen durch mindestens eine der folgenden Objekteigenschaften definiert sind: Material, insbesondere Plastik, Styropor, Holz oder Metall, Festigkeit, insbesondere starr oder flexibel, und Form, insbesondere Quader, Zylinder, Torus oder unregelmäßig.

4. Bilderfassungsvorrichtung (10) nach einem der vorhergehenden Ansprüche, wobei genau zwei Zielklassen definiert sind, insbesondere Karton und kein Karton.

5. Bilderfassungsvorrichtung (10) nach einem der vorhergehenden Ansprüche, wobei der Multiklassen-Klassifikator einen Aufmerksamkeitsmechanismus aufweist.

6. Bilderfassungsvorrichtung (10) nach einem der vorhergehenden Ansprüche, wobei der Multiklassen-Klassifikator eine erste Stufe, die aus den Bilddaten eine Einbettung erzeugt, und eine zweite Stufe aufweist, die aus den Merkmalen der Einbettung die Zwischenklassen bestimmt.

7. Bilderfassungsvorrichtung (10) nach einem der vorhergehenden Ansprüche, wobei die Abbildung die Konfidenzwerte mit jeweiligen Schwellenwerten vergleicht.

8. Bilderfassungsvorrichtung (10) nach einem der vorhergehenden Ansprüche, wobei die Abbildung dadurch eingelernt ist, dass der Multiklassen-Klassifikator Konfidenzwerte für eine Vielzahl mit einer gewünschten Zielklasse annotierte Beispielbilder bestimmt und in einer Optimierung diejenige Abbildung bestimmt wird, die bestmöglich bei Vorgabe der jeweils zu einem Beispielbild gefundenen Konfidenzwerte die zugehörige annotierte Zielklasse reproduziert.

9. Bilderfassungsvorrichtung (10) nach Anspruch 8,
wobei die Optimierung von beliebigen Schwellenwerten ausgeht und nur die Schwellenwerte verändert.

10. Bilderfassungsvorrichtung (10) nach einem der vorhergehenden Ansprüche, die an einer Fördereinrichtung (12) montiert ist, auf der zu klassifizierende Objekte (14) durch das Sichtfeld (18) des Bildsensors (20) gefördert werden, wobei insbesondere die Bilderfassungsvorrichtung (10) mehrere Kameraköpfe umfasst und die Steuer- und Auswertungseinheit (22) dafür ausgebildet ist, Aufnahmen der Kameraköpfe zu einem gemeinsamen Bild zusammenzuführen, wobei die Bilddaten das gemeinsame Bild umfassen.

11. Computerimplementiertes Verfahren zum Zuordnen einer Zielklasse zu einem Objekt (14), wobei Bilddaten des Objekts mit einem Verfahren des maschinellen Lernens, insbesondere einem neuronalen Netz, ausgewertet und klassifiziert werden und den Bilddaten eine Zielklasse zugeordnet wird und dabei als Verfahren des maschinellen Lernens ein Multiklassen-Klassifikator für die Klassifikation in eine Vielzahl von Zwischenklassen eingesetzt wird, wobei der Multiklassen-Klassifikator für das Klassifizieren in Zwischenklassen trainiert wird, **dadurch gekennzeichnet,**
**dass** mit dem Multiklassen-Klassifikator jeweilige Konfidenzwerte für die Zuordnung der Bilddaten zu einer jeweiligen Zwischenklasse bestimmt werden und anschließend durch Anwendung einer Abbildung, die einem Tupel von Konfidenzwerten eine oder mehrere Zielklassen zuordnet, die Zielklasse bestimmt wird, wobei es mindestens eine Zielklasse gibt, die sich nicht unter den Zwischenklassen findet, somit das Verfahren des maschinellen Lernens auf die Zwischenklassen und nicht auf die Zielklassen trainiert ist, und dass die Abbildung in einem Optimierungsverfahren anhand von Zuordnungsbeispielen, die jeweils einem Tupel von Konfidenzwerten eine Zielklasse oder Konfidenzwerte von Zielklassen zuordnen, derart bestimmt wird, dass die Abbildung in einer Fehlermetrik optimal zu den Zuordnungsbeispielen passt, wobei zur Erzeugung von Zuordnungsbeispielen mit Zielklassen annotierte Beispielbilder mit dem Multiklassen-Klassifikator bewertet werden.

12. Verfahren nach Anspruch 11,
wobei die Abbildung dadurch eingelernt wird, dass der Multiklassen-Klassifikator Konfidenzwerte für eine Vielzahl mit einer gewünschten Zielklasse annotierte Beispielbilder bestimmt und in einer Optimierung diejenige Abbildung bestimmt wird, die bestmöglich bei Vorgabe der jeweils zu einem Beispielbild gefundenen Konfidenzwerte die zugehörige annotierte Zielklasse reproduziert.

## Claims

1. An image capturing device (10) for associating a target class with an object (14), wherein the image capturing device (10) has an image sensor (20) for recording image data of the object (14) and a control and evaluation unit (22) which is configured to evaluate and classify the image data using a method of machine learning, in particular a neural network, and to associate a target class with the image data and in this respect to use as a method of machine learning a multiclass classifier for the classification into a plurality of intermediate classes, wherein the multiclass classifier is trained for the classification into intermediate classes,
**characterized in that**
the control and evaluation unit (22) is further configured, using the multiclass classifier, to determine respective confidence values for the association of the image data with a respective intermediate class and subsequently to determine the target class by applying a map, which associates one or more target classes with a tuple of confidence values, wherein there is at least one target class which is not found among the intermediate classes, thus the method of machine learning is trained for the intermediate classes and not for the target classes, and **in that** the map is determined in an optimization process using association examples, which each associate a target class or confidence values of target classes with a tuple of confidence values, such that the map optimally matches the association examples in error metrics, with example images annotated by target classes being evaluated by the multiclass classifier in order to produce association examples.

2. An image capturing device (10) in accordance with claim 1,
wherein none of the target classes is an intermediate class.

3. An image capturing device (10) in accordance with claim 1 or claim 2, wherein the intermediate classes are defined by at least one of the following object properties: Material, in particular plastic, polystyrene, wood, or metal; strength, in particular rigid or flexible; and shape, in particular parallelepiped, cylinder, torus, or irregular.

4. An image capturing device (10) in accordance with any one of the preceding claims,
wherein exactly two target classes are defined, in particular cardboard and not cardboard.

5. An image capturing device (10) in accordance with any one of the preceding claims,
wherein the multiclass classifier has an attention mechanism.

6. An image capturing device (10) in accordance with any one of the preceding claims,
wherein the multiclass classifier has a first stage which generates an embedding from the image data and a second stage which determines the intermediate classes from the features of the embedding.

7. An image capturing device (10) in accordance with any one of the preceding claims,
wherein the map compares the confidence values with respective threshold values.

8. An image capturing device (10) in accordance with any one of the preceding claims,
wherein the map is taught in that the multiclass classifier determines confidence values for a plurality of example images annotated by a desired target class and that map is determined in an optimization which best reproduces the associated annotated target class with a predetermination of the respective confidence values found with respect to an example image.

9. An image capturing device (10) in accordance with claim 8,
wherein the optimization of any desired threshold values is assumed and only the threshold values are changed.

10. An image capturing device (10) in accordance with any one of the preceding claims,
that is installed at a conveying device (12) on which objects (14) to be classified are conveyed through the field of view (18) of the image sensor (20), with in particular the image capturing device (10) comprising a plurality of camera heads and the control and evaluation unit (22) being configured to merge recordings of the camera heads to one common image, with the image data comprising the common image.

11. A computer-implemented method of associating a target class with an object (14), wherein image data of the object are evaluated and classified using a method of machine learning, in particular a neural network, and a target class is associated with the image data and in this respect, as a method of machine learning, a multiclass classifier for the classification into a plurality of intermediate classes is used, wherein the multiclass classifier is trained for the classification into intermediate classes, **characterized in that**
respective confidence values for the association of the image data with a respective intermediate class are determined by the multiclass classifier and subsequently the target class is determined by applying a map, which associates one or more target classes with a tuple of confidence values, wherein there is at least one target class which is not found among the intermediate classes, thus the method of machine learning is trained for the intermediate classes and not for the target classes, and **in that** the map is determined in an optimization process using association examples, which each associate a target class or confidence values of target classes with a tuple of confidence values, such that the map optimally matches the association examples in error metrics, with example images annotated by target classes being evaluated by the multiclass classifier in order to produce association examples.

12. A method in accordance with claim 11,
wherein the map is taught in that the multiclass classifier determines confidence values for a plurality of example images annotated by a desired target class and that map is determined in an optimization which best reproduces the associated annotated target class with a predetermination of the respective confidence values found with respect to an example image.

## Revendications

1. Dispositif d'acquisition d'images (10) pour l'attribution d'une classe cible à un objet (14), le dispositif d'acquisition d'images (10) comprenant un capteur d'images (20) destiné à enregistrer des données d'image de l'objet (14) et une unité de commande et d'évaluation (22) conçue pour évaluer et classifier les données d'image à l'aide d'une méthode d'apprentissage automatique, en particulier à l'aide d'un réseau neuronal, et pour attribuer une classe cible aux données d'image en utilisant, comme méthode d'apprentissage automatique, un classificateur multiclasse pour la classification en une multitude de classes intermédiaires, le classificateur multiclasse étant entraîné pour la classification en classes intermédiaires,
**caractérisé en ce que**
l'unité de commande et d'évaluation (22) est en outre conçue pour déterminer les valeurs de confiance respectives pour l'attribution des données d'image à une classe intermédiaire respective, à l'aide du classificateur multiclasse, puis pour déterminer la classe cible en utilisant une application qui attribue une ou plusieurs classes cibles à un tuple de valeurs de confiance, sachant qu'il existe au moins une classe cible qui n'est pas présente parmi les classes intermédiaires, ce qui signifie que la méthode d'apprentissage automatique est entraînée sur les classes intermédiaires et non pas sur les classes cibles, et
**en ce que** l'application est déterminée par une méthode d'optimisation utilisant des exemples d'attribution qui attribuent une classe cible ou des valeurs de confiance de classes cibles à un tuple respectif de valeurs de confiance, de telle sorte que l'application, selon une métrique d'erreur, corresponde de manière optimale aux exemples d'attribution, et sachant que pour générer des exemples d'attribution, des images types annotées avec des classes cibles sont évaluées par le classificateur multiclasse.

2. Dispositif d'acquisition d'images (10) selon la revendication 1,
dans lequel aucune des classes cibles n'est une classe intermédiaire.

3. Dispositif d'acquisition d'images (10) selon la revendication 1 ou 2, dans lequel les classes intermédiaires sont définies par l'une au moins des caractéristiques d'objet suivantes : matériau, notamment matière plastique, polystyrène, bois ou métal ; résistance, notamment rigide ou flexible ; et forme, notamment parallélépipède, cylindre, tore ou irrégulière.

4. Dispositif d'acquisition d'images (10) selon l'une des revendications précédentes,
dans lequel exactement deux classes cibles sont définies, notamment carton et non carton.

5. Dispositif d'acquisition d'images (10) selon l'une des revendications précédentes,
dans lequel le classificateur multiclasse comprend un mécanisme d'attention.

6. Dispositif d'acquisition d'images (10) selon l'une des revendications précédentes,
dans lequel le classificateur multiclasse comprend une première étape de génération d'un plongement à partir des données d'image et une seconde étape de détermination des classes intermédiaires à partir des caractéristiques du plongement.

7. Dispositif d'acquisition d'images (10) selon l'une des revendications précédentes,
dans lequel l'application compare les valeurs de confiance à des valeurs seuils respectives.

8. Dispositif d'acquisition d'images (10) selon l'une des revendications précédentes,
dans lequel l'application est apprise du fait que le classificateur multiclasse détermine des valeurs de confiance pour une multitude d'images types annotées avec une classe cible souhaitée, et, lors d'une optimisation, détermine l'application qui reproduit le mieux la classe cible annotée associée, les valeurs de confiance trouvées pour chaque image type étant spécifiées.

9. Dispositif d'acquisition d'images (10) selon la revendication 8,
dans lequel l'optimisation part de valeurs seuils arbitraires et ne modifie que les valeurs seuils.

10. Dispositif d'acquisition d'images (10) selon l'une des revendications précédentes,
monté sur un convoyeur (12) sur lequel sont acheminés des objets à classifier (14) à travers le champ de vision (18) du capteur d'images (20),
en particulier, le dispositif d'acquisition d'images (10) comprenant plusieurs têtes de caméra, et l'unité de commande et d'évaluation (22) étant conçue pour combiner les prises de vue issues des têtes de caméra en une image unique, les données d'image constituant cette image unique.

11. Procédé mis en œuvre par ordinateur pour l'attribution d'une classe cible à un objet (14),
dans lequel des données d'image de l'objet sont évaluées et classées à l'aide d'une méthode d'apprentissage automatique, en particulier à l'aide d'un réseau neuronal, et une classe cible est attribuée aux données d'image en utilisant, comme méthode d'apprentissage automatique, un classificateur multiclasse pour la classification en une multitude de classes intermédiaires, le classificateur multiclasse étant entraîné pour la classification en classes intermédiaires,
**caractérisé en ce que**
des valeurs de confiance respectives pour l'attribution des données d'image à une classe intermédiaire respective sont déterminées à l'aide du classificateur multiclasse, puis la classe cible est déterminée en utilisant une application qui attribue une ou plusieurs classes cibles à un tuple de valeurs de confiance, sachant qu'il existe au moins une classe cible qui n'est pas présente parmi les classes intermédiaires, ce qui signifie que la méthode d'apprentissage automatique est entraînée sur les classes intermédiaires et non pas sur les classes cibles, et
**en ce que** l'application est déterminée par une méthode d'optimisation utilisant des exemples d'attribution qui attribuent une classe cible ou des valeurs de confiance de classes cibles à un tuple respectif de valeurs de confiance, de telle sorte que l'application, selon une métrique d'erreur, corresponde de manière optimale aux exemples d'attribution, et sachant que pour générer des exemples d'attribution, des images types annotées avec des classes cibles sont évaluées par le classificateur multiclasse.

12. Procédé selon la revendication 11,
dans lequel l'application est apprise du fait que le classificateur multiclasse détermine des valeurs de confiance pour une multitude d'images types annotées avec une classe cible souhaitée, et, lors d'une optimisation, détermine l'application qui reproduit le mieux la classe cible annotée associée, les valeurs de confiance trouvées pour chaque image type étant spécifiées.
